# EUROPÄISCHE PATENTANMELDUNG

(11) **EP 1 413 862 A1**
(43) Veröffentlichungstag der Anmeldung: **28.04.2004**
(21) Anmeldenummer: 03023962.8
(22) Anmeldetag: 22.10.2003
(51) Int. Cl.: G01K 15/00

(54) **Messanordnung und Verfahren zu Ermittlung einer Messgrösse wie der Temperatur**

(30) Priorität: 23.10.2002 DE 10249411
(71) Anmelder: HONEYWELL B.V., NL-1101 EA Amsterdam (NL)
(72) Erfinder: Vegter, Derk, 7833 BH Nieuw-Amsterdam (NL)
(74) Vertreter: Leson, Thomas Johannes Alois, Dipl.-Ing.

(57) **Zusammenfassung**

Vorgeschlagen wird eine Messanordnung sowie ein Messverfahren, bei dem mittels einer ersten und zweiten Erfassungseinrichtung unabhängig voneinander jeweils ein einer zu erfassenden Messgröße entsprechendes erstes und zweites Erfassungssignal erzeugt wird. Die erste und zweite Erfassungseinrichtung sind dabei derart eingerichtet, dass sie bei Erfassung derselben Messgröße unterschiedliche Erfassungssignale erzeugen, was beispielsweise durch die Verwendung unterschiedlicher Vorschaltwiderstände vor dem jeweiligen Widerstandssensor erreicht werden kann. Auf der Grundlage jedes Erfassungssignals wird dann unabhängig voneinander die zu ermittelnde Messgröße nach unterschiedlichen Verfahren unabhängig voneinander bestimmt. Bei einer derart ermittelten Messgröße kann die Zuverlässigkeit der ermittelten Messgröße auf der Grundlage der Verschiedenheit des ersten und zweiten Erfassungssignals und/oder auf der Grundlage der Gleichheit der errechneten Messgrößen festgestellt werden.

## Beschreibung

Die Erfindung bezieht sich auf eine Messanordnung und ein dazugehöriges Messverfahren, wie es bei der Ermittlung der Temperatur verwendet werden kann.

Bei der Steuerung eines Brenners einer Heizungsanlage wird die Temperatur im Brennraum erfasst, um eine geeignete Regelung der Gaszufuhr bewerkstelligen zu können. Bei dieser Anwendung, bei der der Sensor extremen thermischen Belastungen ausgesetzt ist, kommt es sehr auf die Zuverlässigkeit der Messanordnung an, da, wenn eine zu niedrige Temperatur ermittelt wird, die Gaszufuhr falsch geregelt wird, was in letzter Konsequenz zu einer Beschädigung der Anlage führen kann.

Der Erfindung liegt daher die Aufgabe zugrunde, eine Messanordnung sowie ein Messverfahren anzugeben, bei dem die Zuverlässigkeit des Messergebnisses verbessert ist.

Diese Aufgabe wird hinsichtlich der Anordnung mit den im Patentanspruch 1 und hinsichtlich des Verfahrens mit den im Patentanspruch 10 angegebenen Merkmalen auf vorteilhafte Art und Weise gelöst.

Die Messanordnung umfasst demzufolge eine erste Erfassungseinrichtung zur Erfassung einer Messgröße und zur Erzeugung eines der erfassten Messgröße entsprechenden ersten Erfassungssignals. Parallel hierzu ist eine zweite Erfassungseinrichtung zur Erfassung derselben Messgröße und zur Erzeugung eines der selben erfassten Messgröße entsprechenden zweiten Erfassungssignals vorgesehen. Die beiden Erfassüngseinrichtungen erfassen die Messgröße unabhängig voneinander und erzeugen darüber hinaus auch unabhängig voneinander voneinander unabhängige Erfassungssignale. Die Besonderheit hierbei ist, dass die beiden Erfassungssignale voneinander verschieden sein sollen, obwohl sie dieselbe Messgröße beschreiben. Hierdurch wird eine Vielzahl von Möglichkeiten zur Überprüfung der Zuverlässigkeit des Messergebnisses eröffnet.

Auch mit identischen Erfassungseinrichtungen dürfte es in der Praxis kaum möglich sein, identische Erfassungssignale zu erzeugen. In diesem Fall liegen die Erfassungssignale aber dennoch so weit beieinander, dass keine klare Unterscheidung möglich ist. Bei der erfindungsgemäßen Messanordnung ist deshalb dafür Sorge getragen, dass die jeweiligen Erfassungssignale bei Erfassung derselben Messgröße sich um zumindest einen vorbestimmten Prozentsatz oder zumindest um einen vorbestimmten Wert unterscheiden. Diese Maßnahme dient zur Sicherstellung der Verschiedenartigkeit des ersten und zweiten Erfassungssignals und damit zur Sicherstellung der Überprüfbarkeit der Zuverlässigkeit der Messanordnung bzw. des Messverfahrens.

Die erste und zweite Erfassungseinrichtung können jeweils aus einer Reihenschaltung bestehen, die einen Widerstandssensor und einen Vorschaltwiderstand umfassen. In diesem Fall sind die dann parallel geschalteten Erfassungseinrichtungen mit Spannung zu versorgen, wobei das jeweilige Erfassungssignal am Verbindungspunkt zwischen dem Widerstandssensor und dem Vorschaltwiderstand abgegriffen wird. Durch diesen Aufbau der Messanordnung wird eine besonders einfache Messanordnung erreicht, wobei auch diese Einfachheit zur Zuverlässigkeit der Anordnung beiträgt.

Die erste und zweite Erfassungseinrichtung können jeweils einen Widerstandstemperatursensor mit negativem Temperaturkoeffizienten und einen hierzu in Reihe geschalteten Vorschaltwiderstand umfassen. Die beiden Widerstandstemperatursensoren sollen dabei gleich sein, wohingegen die beiden Vorschaltwiderstände verschieden gewählt werden. Der erste und zweite Widerstandstemperatursensor sind in einem gemeinsamen Gehäuse angeordnet, das mit der übrigen Messanordnung über eine elektrische Leitung verbunden ist.

Die Wahl von Widerstandstemperatursensoren mit negativen Temperaturkoeffizienten ermöglicht bei einer Anwendung der Messanordnung in dem Brenner einer Heizungsanlage eine hohe Genauigkeit der Temperaturmessung. Durch die Wahl unterschiedlicher Vorschaltwiderstände bei Wahl von gleichen Widerstandstemperatursensoren wird erreicht, dass die Erfassungssignale bei Erfassung derselben Messgröße unterschiedlich groß sind. Die Auslagerung der Widerstandstemperatursensoren aus der übrigen Messanordnung stellt sicher, dass nicht die gesamte Messanordnung den Temperatureinflüssen am Messort unterliegt.

Auf der Grundlage des ersten und zweiten Erfassungssignals kann nun auf besonders vorteilhafte Art und Weise die Zuverlässigkeit der durchgeführten Messung überprüft bzw. festgestellt werden.

Zur Prüfung der Zuverlässigkeit der Messung kann ein Erfassungssignal mit einem Erwartungswert verglichen werden, der auf der Grundlage des anderen Erfassungssignals bestimmt wird. Durch diese Maßnahme wird sichergestellt, dass nahezu jede Veränderung der Messanordnung, die zu einer Verfälschung der Messergebnisse führen würde, als unzuverlässig erkannt wird.

Besonders einfach kann dieses Prinzip realisiert werden, indem für jedes korrespondierende Paar von ermittelten Erfassungssignalen geprüft wird, ob es einem zuvor abgelegten oder anders bestimmten Paar von Erfassungssignalen entspricht. Durch diese Überprüfung können falsche Messergebnisse sicher ausgeschlossen werden.

Gleichzeitig ist es aber auch möglich, unzuverlässige Messergebnisse auf der Grundlage von Messgrößen festzustellen, die unabhängig voneinander auf Basis des ersten Erfassungssignals bzw. des zweiten Erfassungssignals ermittelt wurden. Bei dieser Ermittlung der Messgrößen wird die Verschiedenartigkeit der Erfassungssignale wieder herausgerechnet, so dass die bestimmten Messgrößen weitgehend übereinstimmen müssen, um als zuverlässig anerkannt zu werden.

Selbstverständlich kann die Überprüfung der Zuverlässigkeit gleichzeitig auf der Grundlage der Erfassungssignale und auf der Grundlage der ermittelten Messgrößen durchgeführt werden. Dies erlaubt eine noch höhere Zuverlässigkeit der Messanordnung.

In einigen Fällen reicht jedoch auch eine Überprüfung der ermittelten Messgröße ausschließlich auf der Grundlage der Erfassungssignale oder ausschließlich auf der Grundlage der jeweils bestimmten Messgrößen aus.

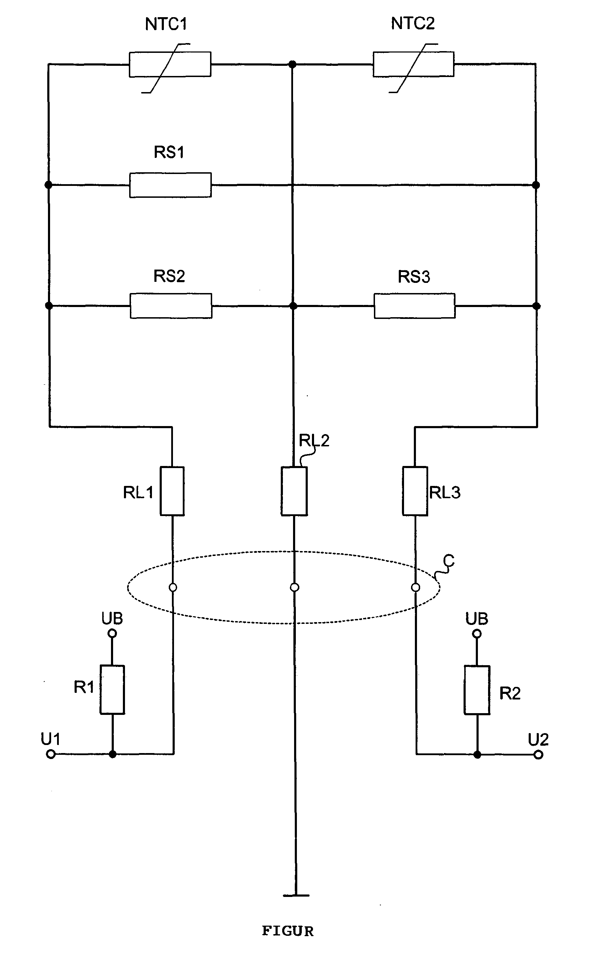

Die Erfindung wird nachfolgend anhand der Figur näher erläutert. Die Figur zeigt ein Ausführungsbeispiel für eine Messanordnung.

In der Figur ist mit NTC1 ein erster Widerstandstemperatursensor und mit NTC2 ein zweiter Widerstandstemperatursensor bezeichnet. Mit R1 bzw. R2 ist ein erster bzw. zweiter Vorschaltwiderstand bezeichnet. UB bezeichnet die Betriebsspannung, die der Messanordnung über die Vorschaltwiderstände zugeführt wird, wohingegen U1 und U2 ein erstes bzw. ein zweites Erfassungssignal bezeichnet. Schließlich ist mit C eine Verbindungseinrichtung, beispielsweise in Form eines Steckverbinders, bezeichnet, die zur Verbindung der Widerstandstemperatursensoren mit der übrigen Meßanordnung dienen.

Die Messanordnung gemäß der Figur entspricht einer Parallelschaltung von zwei Reihenschaltungen, wobei die erste Reihenschaltung aus dem Vorschaltwiderstand R1 und dem Widerstandstemperatursensor NTC1 und die zweite Reihenschaltung aus dem Vorschaltwiderstand R2 und dem Widerstandstemperatursensor NTC2 besteht. Den Vorschaltwiderständen wird die Betriebsspannung zugeführt wohingegen die Widerstandstemperatursensoren mit der Masse verbunden sind.

Jeweils ein Widerstandstemperatursensor zusammen mit einem Vorschaltwiderstand bildet eine Erfassungseinrichtung. Ein Erfassungssignal der jeweiligen Erfassungseinrichtung wird jeweils am Verbindungspunkt zwischen dem Vorschaltwiderstand und dem Widerstandstemperatursensor abgegriffen.

In der Figur sind darüber hinaus noch die Fehlschlusswiderstände RS1, RS2 und RS3 eingezeichnet. Diese Fehlschlusswiderstände sind im Idealfall unendlich bzw. betragen einige 100 MΩ. Im Fehlerfall sind diese Widerstände jedoch jeweils 0 Ω oder verhältnismäßig niederohmig, sodass sie das Messergebnis negativ beeinflussen.

Ebenfalls in die Figur eingezeichnet sind Verbindungswiderstände RL1, RL2 und RL3. Diese Widerstände sind im Normalfall 0 Ω, können im Fehlerfall hiervon jedoch deutlich abweichen. So kann beispielsweise an der Verbindungseinrichtung C ein Übergangswiderstand von 100 Ω auftreten. Auch eine völlige Unterbrechung kann vorkommen.

Die Widerstandstemperatursensoren NTC1 und NTC2 sind im gezeigten Beispiel identisch gewählt. Vorteilhafterweise kommt hier ein Widerstandstemperatursensor mit einem negativen Temperaturkoeffizienten zum Einsatz. Als Beispiel könnte ein Widerstandstemperatursensor verwendet werden, der bei 20 °C 10 kΩ und bei 100 °C nur noch 690 Ω aufweist.

Die Vorschaltwiderstände R1 und R2 werden unterschiedlich gewählt. Als Beispiel für R1 könnte ein Widerstand mit einem Widerstandswert von 1,96 kΩ gewählt werden. Der Wert für R2 könnte 5,62 kΩ betragen.

Als Betriebsspannung ist beispielsweise eine Gleichspannung von 5 V geeignet.

### Normalfall

Im Normalfall sind die Fehlschlusswiderstände RS1, RS2 und RS3 unendlich und die Verbindungswiederstände RL1, RL2 und RL3 gleich 0 Ω.

An den voneinander verschiedenen Vorschaltwiderständen R1 und R2 liegt die Betriebsspannung. Es fließt ein Strom durch die Vorschaltwiderstände R1 und R2, sowie durch die Widerstandtemperatursensoren NTC1 und NTC2. Die beiden Widerstandstemperatursensoren NTC1 und NTC2 bestimmen am selben Messort dieselbe Messgröße, in diesem Beispiel die Temperatur. Entsprechend der Erwärmung der Widerstandstemperatursensoren NTC1 und NTC2 werden sich entsprechende Ströme in den beiden Zweigen der Messanordnung einstellen.

Bei den Erfassungssignalen U1 und U2 handelt es sich im gezeigten Beispiel um den Spannungsabfall an den jeweiligen Widerstandstemperatursensoren NTC1 und NTC2. Entsprechend den unterschiedlichen in den einzelnen Zweigen fließenden Strömen wird sich bei korrekter Arbeitsweise der Messanordnung das Erfassungssignal U1 vom Erfassungssignal U2 unterscheiden.

Die Erfassungssignale U1 und U2 werden einer nachfolgenden, in der Figur nicht gezeigten Auswerteeinrichtung zugeführt.

Auf der Grundlage des ersten Erfassungssignals U1 ermittelt die Auswerteeinrichtung unter Berücksichtigung des Widerstandswertes des Vorschaltwiderstandes R1 die Temperatur am Messort. Darüber hinaus ermittelt die Auswerteeinrichtung auf der Grundlage des Erfassungssignals U2 und unter Berücksichtigung des Widerstandswertes des Vorschaltwiderstandes R2 nochmals die Temperatur am Messort.

Bei korrekter Arbeitsweise der Messanordnung sind die Erfassungssignale U1 und U2 voneinander verschieden, wohingegen die ermittelte Temperatur in beiden Fällen die gleiche sein muss.

Die Auswerteeinrichtung überprüft die Zuverlässigkeit der Messung auf der Grundlage des ersten und zweiten Erfassungssignals U1 und U2.

Dabei kann sie die Zuverlässigkeit eines Erfassungssignals durch Vergleich mit einem Erwartungswert prüfen, der auf der Grundlage des anderen Erfassungssignals bestimmt wird.

Vorteilhafterweise weist die Auswerteeinrichtung hierfür eine Speichereinrichtung auf, in der eine Vielzahl von zusammengehörenden ersten und zweiten Erfassungssignalen abgelegt sind. Die Auswerteeinrichtung kann die Zuverlässigkeit der ermittelten Signale dann feststellen, wenn ein korrespondierendes Paar von abgelegten Erfassungssignalen in der Speichereinrichtung enthalten ist. Ist kein korrespondierendes Paar von abgelegten Erfassungssignalen in der Speichereinrichtung enthalten, ist die Messung unzuverlässig und wird ein entsprechendes Fehlersignal ausgegeben.

Darüber hinaus kann die Auswerteeinrichtung die Zuverlässigkeit der Messung bzw. der Messanordnung noch weiter dadurch überprüfen, dass sie die Gleichheit der jeweils ermittelten Temperatur feststellt. Selbstverständlich werden die Messergebnisse nicht hundertprozentig gleich sein, so dass hier ein Rahmen festzulegen ist, in dem die ermittelten Temperaturen als gleich betrachtet werden.

Zur Erhöhung der Genauigkeit der Messung können die beiden Signale noch gemittelt werden.

### Erster Fehlerfall: RS1 ist nicht unendlich

In diesem Fall ist der Verbindungspunkt zwischen dem Vorschaltwiderstand R1 und dem Widerstandstemperatursensor NTC1 mit dem Verbindungspunkt zwischen dem Vorschaltwiderstand R2 und dem Widerstandstemperatursensor NTC2 verbunden.

Ist der Widerstand RS1 dabei 0, ist das erste Erfassungssignal U1 gleich dem zweiten Erfassungssignal U2. Dementsprechend wird sich kein korrespondierendes Paar von Erfassungssignalen in der Speichereinrichtung der Auswerteeinrichtung finden und die Messung bzw. die Messanordnung ist schnell als fehlerhaft erkannt.

Da in diesem Fall das Erfassungssignal U1 denselben Wert wie das Erfassungssignal U2 aufweist, wird die Auswerteeinrichtung für die Temperatur auch völlig unterschiedliche Temperaturwerte errechnen, woraus ebenfalls der Fehler erkannt werden kann.

Ist der Widerstand RS1 dagegen von 0 Ω verschieden, beispielsweise 1 kΩ, dann ist das Erfassungssignal U1 nicht identisch dem Erfassungssignal U2. Dennoch wird sich in der Speichereinrichtung der Auswerteeinrichtung kein geeignetes Paar von Erfassungssignalen finden, die zu den in diesem Fehlerfall ermittelten Erfassungssignalen passen. Auch die ermittelten Temperaturen passen nicht zusammen, so dass auch bei einem Fehlschluss, der nicht 0 Ω oder sehr niederohmig ist, sicher eine Fehlfunktion der Messanordnung erkannt werden kann.

### Zweiter Fehlerfall: RS2 oder RS3 ist nicht unendlich

Da für diese beiden Fälle dasselbe gilt, reicht es, hier den Fehlerfall RS2 ist nicht unendlich zu untersuchen.

Für den Fall, dass der Fehlschlusswiderstand 0 Ω oder sehr niederohmig ist, liegt der Verbindungspunkt zwischen dem Vorschaltwiderstand R1 und dem Widerstandstemperatursensor NTC1 auf Masse, bzw. ist der Widerstandstemperatursensor NTC1 kurzgeschlossen.

Dementsprechend ist das Erfassungssignal U1 0 oder sehr niedrig. Dies ermöglicht ohne weiteres die Erkennung eines Fehlers, weil sich in diesem Fall wiederum kein entsprechendes Paar von Erfassungssignalen in den gespeicherten Erfassungssignalen finden wird.

Für denn Fall, dass der Fehlschlusswiderstand einige hundert Ω aufweist, würde er das Erfassungssignal U1 ebenfalls derart verfälschen, dass sich in der Speichereinrichtung der Auswertevorrichtung kein entsprechendes Paar von Erfassungssignalen finden wird.

Auch die jeweils ermittelten Temperaturen werden so weit voneinander abweichen, dass ein Fehlerfall sicher erkannt werden kann.

### Dritter Fehlerfall: RL2 ist verschieden von 0

In diesem Fall wird zwischen die gesamte Widerstandsanordnung und die Masse ein Widerstand eingeschaltet. Hierdurch steigen die Werte der Erfassungssignale U1 und U2 an. Gleichzeitig verschiebt sich auch das Verhältnis zwischen den Werten der Erfassungssignale U1 und U2, so dass auch hier kein zusammengehöriges Paar von Erfassungssignalen in der Speichereinrichtung der Auswerteeinrichtung gefunden werden kann.

Je größer hier der Widerstand RL von 0 verschieden ist, desto ähnlicher werden sich auch die Erfassungssignale U1 und U2. Dementsprechend laufen die ermittelten Temperaturen auseinander, so dass auch auf der Grundlage der ermittelten Temperaturen der Fehlerfall festgestellt werden kann.

### Vierter Fehlerfall: RL1 oder RL3 ist nicht 0

Für diese beiden Fälle gilt jeweils dasselbe, dass die Messanordnung bezüglich der Verbindungswiderstände RL1 und RL3 symmetrisch ist.

Ist RL1 verschieden von 0Ω, steigt automatisch das Erfassungssignal U1, weil der Gesamtwiderstand aus dem Widerstandstemperatursensor NTC1 und dem Verbindungswiderstand RL1 ansteigt.

Dieser Anstieg des Erfassungssignals U1 lässt das Erfassungssignal U2 aber unverändert, so dass die Erfassungssignale wiederum nicht zusammenpassen, was zur Erkennung eines Fehlerfalles führt.

Dieser Fehler ist umso leichter zu erkennen, je weiter der Verbindungswiderstand RL1 ansteigt.

Dieser Fehler führt ebenfalls dazu, dass die jeweils separat ermittelten Temperaturen auseinanderlaufen, so dass auch aufgrund der ermittelten Temperaturen auf die mangelnde Zuverlässigkeit der Messanordnung geschlossen werden kann.

Bei dem vorangehenden Beispiel dienen die Widerstandssensoren NTC1 und NTC2 zur Ermittlung der Temperatur. Hierfür eignet sich das vorgeschlagene Messverfahren bzw. die vorgeschlagene Messanordnung besonders gut. Selbstverständlich lässt sich das Prinzip der Messanordnung bzw. das Prinzip des Messverfahrens auch auf jede andere Art von Messanordnung übertragen, bei der ein Widerstandssensor bzw. entsprechend dem Prinzip der Erfindung zwei Widerstandssensoren zum Einsatz kommen.

Eine Übertragung des Prinzips der vorstehend beschriebenen Messanordnung auf ein anderes Gebiet ist jedoch nur dort sinnvoll, wo es auf die Zuverlässigkeit der Messung ankommt.

In dem gezeigten Beispiel wird zur Temperaturermittlung ein Widerstandstemperatursensor mit negativem Temperaturkoeffizienten verwendet. Das gezeigte Prinzip ist aber nicht auf einen Widerstandstemperatursensor mit negativem Temperaturkoeffizienten beschränkt. Vielmehr kann grundsätzlich auch ein Widerstandstemperatursensor mit positivem Temperaturkoeffizienten Verwendung finden.

Bei der oben beschriebenen Messanordnung wurden die Widerstandstemperatursensoren NTC1 und NTC2 gleich und die Vorschaltwiderstände R1 und R2 unterschiedlich gewählt. Es ist aber auch möglich, die Vorschaltwiderstände gleich und die Widerstandstemperatursensoren unterschiedlich zu wählen.

Gleichzeitig können selbstverständlich auch sowohl die Widerstandstemperatursensoren als auch die Vorschaltwiderstände unterschiedlich gewählt sein.

Bei Wahl gleicher Widerstandssensoren und unterschiedlicher Vorschaltwiderstände sind die Vorschaltwiderstände derart unterschiedlich zu wählen, dass sich über den gesamten zu erwartenden Messbereich ein deutlicher Unterschied in den Erfassungssignalen einstellt. Vorzugsweise weisen die Erfassungssignale einen Unterschied von zumindest 10 % voneinander auf. Es ist jedoch auch möglich, mit einem geringeren Unterschied, wie beispielsweise 5 % zu arbeiten. Wie groß dieser Unterschied sinnvollerweise sein muss, hängt von der nachfolgenden Auswerteeinrichtung ab bzw. von deren Fähigkeit, die Erfassungssignale zu unterscheiden.

Auch kann ein vorbestimmter Spannungswert als minimales Unterscheidungskriterium gewählt werden. Wie dieser Wert gewählt wird, hängt jedoch nicht nur von der nachfolgenden Auswerteeinrichtung, sondern auch von der gewählten Betriebsspannung ab.

Ebenfalls von der Genauigkeit der Messanordnung hängt ab, welcher Unterschied zwischen den auf der Grundlage der Erfassungssignale ermittelten Temperaturen zugelassen wird. Hier kann wiederum eine prozentuale Abweichung oder eine Abweichung um einen festen Betrag als Akzeptanzschwelle für die Zuverlässigkeit der Messung definiert werden.

Bei der gezeigten Anordnung entspricht das Erfassungssignal der Spannung am Widerstandssensor. Die Schaltung kann jedoch auch so aufgebaut werden, dass das Erfassungssignal der Spannung am Vorschaltwiderstand entspricht.

Bei der oben beschriebenen Anordnung sind die Widerstandstemperatursensoren in einem gemeinsamen Gehäuse angeordnet, das mit der übrigen Messanordnung über eine elektrische Leitung verbunden ist. Es ist jedoch grundsätzlich ebenfalls möglich, auch weitere Teile der Messanordnung in demselben Gehäuse anzuordnen. So können beispielsweise auch die Vorschaltwiderstände R1 und R2 in dem Gehäuse angeordnet sein, was jedoch eine höhere Anzahl von Verbindungsleitungen zum Sensorgehäuse erfordert. Gleichzeit sind dann auch die Vorschaltwiderstände dem Temperatureinfluss ausgesetzt, was ebenfalls weniger wünschenswert erscheint. Insofern ist die oben gezeigte Anordnung vorteilhaft.

Die in der Figur nicht gezeigte Auswerteeinrichtung kann die Zuverlässigkeit der Messung anhand der Erfassungssignale oder anhand der ermittelten Temperatur bestimmen. Zur weiteren Erhöhung der Zuverlässigkeit ist auch eine gleichzeitige Ermittlung der Zuverlässigkeit auf der Grundlage der Erfassungssignale und der Temperatur möglich.

Bei einigen Anwendungsfällen kann zwischen dem ersten und zweiten Erfassungssignal ein rechnerischer Zusammenhang bestehen, der es möglich macht, dass die geeignete Zusammengehörigkeit der Paare von Erfassungssignalen rechnerisch überprüfbar ist. In anderen Anwendungsfällen kann es von Vorteil sein, in der Auswerteeinrichtung eine Speichereinrichtung vorzusehen, in der eine Vielzahl von Erfassungssignalen U1 und U2 paarweise angeordnet sind, so dass für jedes Erfassungssignal geprüft werden kann, ob das andere Erfassungssignal dazu passt, und insofern die Messung zuverlässig ist.

Die Auswerteeinrichtung übernimmt selbstverständlich gleichzeitig auch die Aufgabe, anzuzeigen, ob eine Messung zuverlässig ist oder nicht, bzw. ob die Messanordnung zuverlässig ist oder nicht. Darüber hinaus kann auf der Grundlage der Erfassungssignale gleichzeitig auch eine Fehleranalyse erfolgen. In diesem Fall kann das Fehlersignal dann differenzierter ausfallen, d.h. eine Information über die Art des Fehlers enthalten.

Darüber hinaus kann die Erfassungseinrichtung auch derart ausgestaltet sein, dass sie einen sich anbahnenden Fehler protokolliert und eine Fehlerankündigung ausgibt, beispielsweise in Form der noch zu erwartende Lebensdauer der Messanordnung.

Vorgeschlagen wird eine Messanordnung sowie ein Messverfahren, bei dem mittels einer ersten und zweiten Erfassungseinrichtung unabhängig voneinander jeweils ein einer zu erfassenden Messgröße entsprechendes erstes und zweites Erfassungssignal erzeugt wird. Die erste und zweite Erfassungseinrichtung sind dabei derart eingerichtet, dass sie bei Erfassung derselben Messgröße unterschiedliche Erfassungssignale erzeugen, was beispielsweise durch die Verwendung unterschiedlicher Vorschaltwiderstände vor dem jeweiligen Widerstandssensor erreicht werden kann. Auf der Grundlage jedes Erfassungssignals wird dann unabhängig voneinander die zu ermittelnde Messgröße nach unterschiedlichen Verfahren unabhängig voneinander bestimmt. Bei einer derart ermittelten Messgröße kann die Zuverlässigkeit der ermittelten Messgröße auf der Grundlage der Verschiedenheit des ersten und zweiten Erfassungssignals und/oder auf der Grundlage der Gleichheit der errechneten Messgrößen festgestellt werden.

## Patentansprüche

1. Messanordnung, insbesondere zur Temperaturermittlung, mit
einer ersten Erfassungseinrichtung (NTC1, R1) zur Erfassung einer Messgröße und zur Erzeugung eines der erfassten Messgröße entsprechenden ersten Erfassungssignals (U1) , und
einer zweiten Erfassungseinrichtung (NTC2, R2), zur Erfassung derselben Messgröße und zur Erzeugung eines derselben erfassten Messgröße entsprechenden zweiten Erfassungssignals (U2), das von dem ersten Erfassungssignal verschieden ist,
wobei die erste und zweite Erfassungseinrichtung jeweils einen Widerstandstemperatursensor (NTC1, NTC2) mit negativen Temperaturkoeffizienten und einen Vorschaltwiderstand (R1, R2) umfassen und
wobei die beiden Widerstandstemperatursensoren gleich und die beiden Vorschaltwiderstände verschieden gewählt werden.

2. Messanordnung nach Anspruch 1, **dadurch gekennzeichnet,**
**dass** das erste und zweite Erfassungssignal elektrische Signale sind, deren denselben Messwert repräsentierende Spannungswerte sich zumindest um einen vorbestimmten Prozentsatz oder zumindest um einen vorbestimmten Wert voneinander unterscheiden.

3. Messanordnung nach Anspruch 1, **dadurch gekennzeichnet,**
**dass** die erste und zweite Erfassungseinrichtung jeweils eine spannungsbeaufschlagte Reihenschaltung aus einem Widerstandssensor (NTC1, NTC2) und einem Vorschaltwiderstand (R1, R2) umfassen und
**dass** das jeweilige Erfassungssignal am Verbindungspunkt zwischen dem Widerstandssensor und dem Vorschaltwiderstand abgegriffen wird.

4. Messanordnung nach Anspruch 1, **dadurch gekennzeichnet,**
**dass** der erste und zweiten Widerstandstemperatursensor in einem gemeinsamen Gehäuse angeordnet sind, das mit der übrigen Messanordnung über eine elektrische Leitung verbunden ist.

5. Messanordnung nach Anspruch 1, **dadurch gekennzeichnet,**
**dass** eine Auswerteeinrichtung vorgesehen ist, die auf der Grundlage des ersten und zweiten Erfassungssignals die Zuverlässigkeit der Messung überprüft.

6. Messanordnung nach Anspruch 1, **dadurch gekennzeichnet,**
**dass** eine Auswerteeinrichtung vorgesehen ist, die die Zuverlässigkeit der Messung durch Vergleich eines Erfassungssignals mit einem Erwartungswert prüft, der auf der Grundlage des anderen Erfassungssignals bestimmt wird.

7. Messanordnung nach Anspruch 1, **dadurch gekennzeichnet,**
**dass** eine Auswerteeinrichtung vorgesehen ist, die eine Speichereinrichtung umfasst, in der eine Vielzahl von zusammen gehörenden ersten und zweiten Erfassungssignalen abgelegt sind, und
**dass** die Auswerteeinrichtung die Zuverlässigkeit der Messung feststellt, wenn ein korrespondierendes Paar von abgelegten Erfassungssignalen in der Speichereinrichtung enthalten ist.

8. Messanordnung nach Anspruch 1, **dadurch gekennzeichnet,**
**dass** eine Auswerteeinrichtung vorgesehen ist, die die Messgröße einmal auf der Grundlage des ersten Erfassungssignals und einmal auf der Grundlage des zweiten Erfassungssignals bestimmt und auf der Grundlage der beiden derart bestimmten Messgrößen die Zuverlässigkeit der Messung überprüft.

9. Messanordnung nach Anspruch 1, **dadurch gekennzeichnet,**
**dass** eine Auswerteeinrichtung vorgesehen ist, die die Zuverlässigkeit der Messung auf der Grundlage der Erfassungssignale und der daraus jeweils bestimmten Messgrößen überprüft.

10. Messverfahren, insbesondere zur Ermittlung der Temperatur, mit einer Messanordnung mit
einer ersten Erfassungseinrichtung (NTC1, R1) zur Erfassung einer Messgröße und zur Erzeugung eines der erfassten Messgröße entsprechenden ersten Erfassungssignals (U1) und
einer zweiten Erfassungseinrichtung (NTC2, R2) zur Erfassung derselben Messgröße und zur Erzeugung eines derselben erfassten Messgröße entsprechenden zweiten Erfassungssignals (U2), das von dem ersten Erfassungssignal verschieden ist,
wobei die erste und zweite Erfassungseinrichtung jeweils einen Widerstandstemperatursensor (NTC1, NTC2) mit negativen Temperaturkoeffizienten und einen Vorschaltwiderstand (R1, R2) umfassen und
wobei die beiden Widerstandstemperatursensoren gleich und die beiden Vorschaltwiderstände verschieden gewählt werden,
bei dem auf der Grundlage des ersten und zweiten Erfassungssignals deren Zuverlässigkeit geprüft wird.

11. Messverfahren nach Anspruch 10, **dadurch gekennzeichnet,**
**dass** die Zuverlässigkeit der Messung durch Vergleich eines Erfassungssignals mit einem Erwartungswert geprüft wird, der auf der Grundlage des anderen Erfassungssignals bestimmt wird.

12. Messverfahren nach Anspruch 10, **dadurch gekennzeichnet,**
**dass** die Zuverlässigkeit der Messung festgestellt wird, wenn ein korrespondierendes Paar von abgelegten Erfassungssignalen in der Speichereinrichtung enthalten ist.

13. Messverfahren nach Anspruch 10, **dadurch gekennzeichnet,**
**dass** die Messgröße einmal auf der Grundlage des ersten Erfassungssignals und einmal auf der Grundlage des zweiten Erfassungssignals bestimmt wird und auf der Grundlage der beiden derart bestimmten Messgrößen die Zuverlässigkeit der Messung überprüft wird.

14. Messverfahren nach Anspruch 10, **dadurch gekennzeichnet,**
**dass** die Zuverlässigkeit der Messung auf der Grundlage der Erfassungssignale und der daraus jeweils bestimmten Messgrößen überprüft wird.
